# EUROPEAN PATENT SPECIFICATION

(11) **EP 0 646 295 B1**
(45) Date of publication and mention of the grant of the patent: **27.12.1996**
(21) Application number: 93913228.8
(22) Date of filing: 28.05.1993
(51) Int. Cl.: H02G 15/013, H02G 15/076, H02G 15/007

(54) **CABLE SEALING DEVICE**
VORRICHTUNG ZUM ABDICHTEN VON KABELN
DISPOSITIF POUR L'OBTURATION DE CABLES

(30) Priority: 15.06.1992 GB 9212624
(43) Date of publication of application: 05.04.1995
(73) Proprietor: N.V. RAYCHEM S.A., 3010 Kessel-Lo (BE)
(72) Inventor: NOLF, Jean-Marie, Etienne, B-3360 Korbeek-Lo (BE)
(74) Representative: Benson, John Everett
(86) International application number: GB9301120
(87) International publication number: WO9326070

(56) References cited:
- EP-A- 0 316 911
- WO-A-90/05401
- WO-A-92/05609
- DE-A- 2 263 419
- GB-A- 2 067 364
- US-A- 4 295 005
- US-A- 4 341 922

## Description

The present invention relates to an article for forming a cable seal, in particular for forming a ready access butt closure or an in-line closure for a telecommunications or other cable splice. It may however be used for forming a cable feedthrough.

Cable splices have to be sealed against the environment to prevent damage to the cable conductors and connectors joining them, When a cable splice is made, cable jacket is stripped back from the ends of the cables to be spliced to expose the conductors to be connected. After the splice is made a so-called splice case, or splice closure, is built up around the splice.

In certain instances it is desirable for the splice to be of butt, rather than in-line configuration. This means that two or more cables lying side-by-side with their ends pointing in the same direction are spliced together. An advantage is that a housing comprising a domed cover can be slid over the resulting splice. A single seal then has to be made where the cables leave an outlet of the housing. In the case of an in-line splice (made between ends of cables that face one another) two seals need to be made, one at each end of a generally cylindrical housing that surrounds the splice. Also, the housing of a butt closure need not be of the wrap-around type and can still be removed.

Various cable splice closures have been proposed in the past, a few of which will be reviewed below.

US 4194082 (Campbell) disclosed a generally dome-shaped closure having a heat-shrinkable end that is shrunk down around an ingoing cable. As a result of heat-shrinkage, a seal is made around the cable, isolating the inside of the closure from the environment.

WO 90/05401 (Raychem) discloses an in-line splice closure that can avoid the use of heat-shrinkable materials. A sealing material, for example a gel, is provided as part of end seals that seal gaps between in-going and out-going cables of a splice case, a central part of which comprises a generally cylindrical housing. The end seals comprise the gel between structures that can be brought together to deform the gel to seal it to the cables and the central housing.

US 4701574 (Shimirak et al) also discloses a closure which includes a cable end seal and a central generally cylindrical housing. The end seals have an outer convoluted surface that mates with a convoluted surface of the cylindrical housing. In this way the end seals are retained in appropriate positions at the ends of the housing.

US 3984623 (Worden) discloses a cable splice housing having a hollow, tubular, plastics body, an end of which carries a plug, the opposite end being blind. A clamp is provided around the hollow body for clamping the body around the plug. The housing is filled with grease.

US 2771502 (J H King et al) discloses a splice closure comprising an elongate housing, each end of which has clamping means for gripping therein outwardly-turned tabs of the jackets of the cables being spliced. This provides axial pull-strength across the splice: load is carried by the housing rather than by connectors and conductors of the cable. A resilient compressible bushing seals each end of the closure and is connected to the gripping means by a bolt.

US 2688651 (J Blake) discloses a cable joint protector comprising a tubular enclosing sleeve for positioning over a cable joint with the cables extending out of each end of the sleeve. The sleeve having at each end a sealing arrangement comprising an external thread on the sleeve, and an end cap having an internal thread such that the cap can be screwed onto an end of the sleeve. A resilient plug having a hole for the cable, is slid along each cable into the end of the sleeve. The cap is then screwed onto the sleeve causing the plug to be deformed into sealing engagement with the cable and the inside of the sleeve.

DE-A-2263419 discloses a cable fitting, e.g. a connecting or branching sleeve for electrical cables, comprising a base plate through which the cables are passed, and a cover which can be connected to the base plate. A sealing system surrounds the cables in the area where the base plate and the cover are connected, the sealing system being arranged between the base plate and at least one stop provided inside the cover, in such a way that on connecting the base plate and the cover, the stop exerts pressure forces on the plastic sealing material of the sealing system directed in the longitudinal direction of the cable in the interior of the cover and the base plate.

US 4341922 discloses a strain-relief device for use in a cable splice case for communications cables. The device comprises a horizontal portion having a plurality of tangs projecting from it, a vertical portion projecting upwardly from the horizontal portion, and reinforcing means between the horizontal and vertical portions. The tangs on the horizontal portion grip the outer sheath of a cable, while the vertical edge abuts the interior end of a cable collar extending through an end plate. The device relieves strain in the cable by allowing it to pass through to the outer shell of the cable splice case.

This disclosure of each of the above-mentioned patent specifications is incorporated herein by reference.

Whilst satisfactory seals can be made using the techniques described above, each has its drawbacks. Many of them are complex and expensive and take time to carry out.

We have now discovered that an improved cable seal can be made separating the sealing function from mechanical attachment. I prefer that this separation allows substantially radial movement of the cables in response, for example, to displacement of a sealing material.

Thus, the invention as defined in claim 1 provides
a cable sealing device, which comprises:
(a) a housing into which the cable passes;
(b) a sealing material that seals a gap between the cable and the housing; and
(c) means for transmitting an axial force in the cable to the housing other than through the sealing material (b);
in which the means (c) allows substantially radial movement of the cable.

Preferred embodiments of the invention are disclosed in dependent claims.

In general, unless the context otherwise requires it, "axial" means substantially axial with respect to the cable, "transverse" means in a plane substantially perpendicular to the cable, and "radial" means substantially towards or away from the cable, preferably in the transverse plane.

The sealing material preferably comprises a gel or other material having a cone penetration (measured by a modified version of ASTM D217) within the range 30-400 (10⁻¹ mm), and/or an ultimate elongation (measured by ASTM D412) greater than 100%, with substantially elastic deformation to an elongation of at least 100%. Generally such materials comprise an oil or other liquid-extended polymer composition. the composition preferably contains a three dimensional cross-linked molecular structure. Such structures may be formed from block copolymers having relatively hard blocks and relatively elastomeric blocks, examples of such copolymers including styrene-diene block copolymers (for example styrene isoprene or styrene-butadiene block copolymers) or styrene-ethylene butylene-styrene triblock copolymers. Examples of triblock copolymers include those supplied by Shell under the trademark kraton. These block copolymers are extended by oils. The resulting gels will in general be thermoplastic, as is preferred for ease of manufacture of the product. In one embodiment a gel is used comprising 10-14% by weight of the copolymer Kraton G1651, 84-88% of a mineral oil and minor amounts of a stabilizer etc. Other gels can be used if desired, for example those based on polyurethanes or silicones. Harder gels may be made by reducing the oil content, for example by using 78-82% oil and if desired a mixture of block copolymers such as Kraton G1651 and Kraton G1650 preferably about 10% of each.

In order to aid positioning of the housing around the sealing material, the sealing material may be extended axially with respect to the cable thereby contracting it transversely. In any case the sealing material is preferably positioned around the cable (or cables) and the housing then slid along the cable and over the sealing material. Alternatively, the cable may remain fixed with respect to the housing and the sealing material slid with respect to both of them. The sealing material preferably comprises a generally cylindrical plug having an axial hole therethrough for each cable. Such holes preferably communicate with the outer circumference of the plug by a slit through the sealing material. In this way the plug can be "wrapped-around" the cable, obviating the need for access to a free end of the cable.

Where the cable seal is to seal a splice, two or more cables will generally lie side-by-side. In this case the sealing material will be positioned around the cables and form a seal between them, and also between the cables and the surrounding housing.

Furthermore, the restricting means preferably comprises a resilient metal or plastics band having at least one inwardly, substantially radially-extending projection.

The housing may be of any suitable design, but for a butt splice closure we prefer that it comprises
(a) a first part that surrounds the sealing material (b) and the means (c), and
(b) a second part, preferably substantially dome-shaped, that comprises a cover for the first part.

The second part is preferably removably attached to the first part so that access to the cables sealed by the housing may readily be made. The two parts may be held together by a circular or other clamp, optionally together with an O-ring or other sealing means positioned between two abutting surfaces of the two parts.

Where an in-line cable splice closure is to be formed the housing may have a sealing material (b) and means (c) adjacent each end thereof.

The means (c) may comprise a cable clamp having a first part for attachment to a cable and a second part that cooperates with a substantially radially-extending part of the housing. Such a cable clamp (or the first part thereof) may comprise any suitable design, for example a hose-clamp or a jubilee clip (trade mark). The two parts may be integral. or they may initially be separate and connected by, for example, a rivet or by a snap-fit.

I prefer that the housing have an internal transverse member, for example in the form of a plate or a flange, having a substantially radially extending recess or rail along which the second part of the cable clamp can slide.

The sealing material (b) may be provided with means for axially compressing it. Such axial compression can cause displacement of the material in the transverse plane causing a seal to be made between the cables and the surrounding housing. The means for compressing may comprise two plates between which the sealing material is positioned. and means for bringing the two plates together, such as a nut and bolt together with a spring. Preferably such plates are free to move with respect to means (c) thus ensuring decoupling between the sealing functions and the mechanical attachment.

In this way the sealing material can retain a good seal in spite of tension or compression or bending movements in the cable. Also, the sealing material can be compressed to form the seal, and the cable can move as required in response to the forces set up in the sealing material. This would not be possible if the cable were rigidly attached to the housing without the possibility for radial movement provided by the invention.

The transverse member within the housing is preferably provided further within the housing than the sealing material. In this way the transverse member can be a substantially continuous plate, requiring no holes for access through it of any means for compressing the sealing material. The transverse member can therefore be made stronger. and it will be protected from the environment. Preferably the transverse member can be slid into the housing and then locked, for example by rotation against axial movement with respect to the housing. At least when the housing has a removable (top) cover the transverse member is preferably inserted into the base of the housing through the top thereof, ie through the end that mates with the cover, rather than through the opposite end (the bottom) through which the cable leaves the housing. In this way the bottom of the base can have a permanently restricted opening, helping to secure the sealing material (b) within it.

The invention is further illustrated by the accompanying drawings, in which:
Figure 1 shows a butt cable splice closure;
Figures 2 and 3 show seals for use within housing of a splice closure;
Figure 4 shows a transverse member for anchoring cables within a housing of a splice closure;
Figure 5 shows the way in which radial cable movement may occur; and
Figure 6 shows a cable clamp for use with a transverse member.

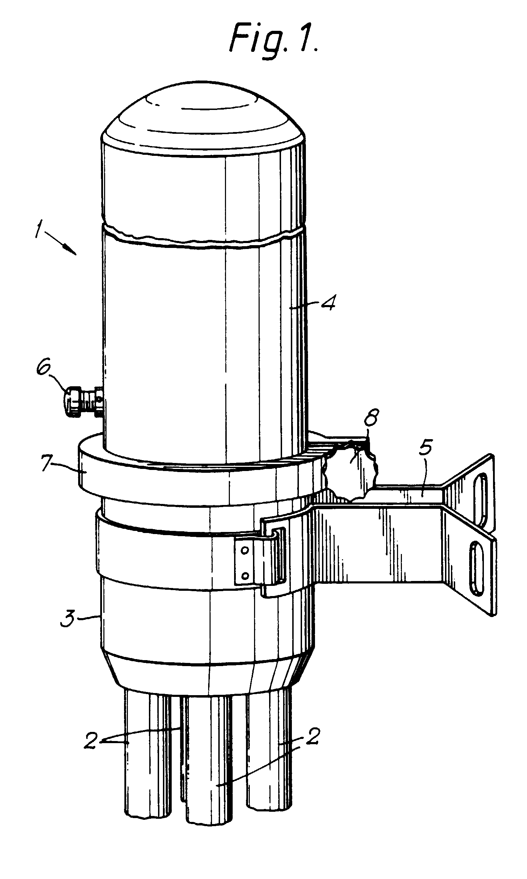

Figure 1 shows a butt splice closure 1 sealing a splice between cables 2. The closure 1 comprises a base 3 through which the cables 2 pass and a dome-shaped cover 4 that mates with the base 3 and within which the cable splice itself is concealed. The closure may be attached by means of a bracket 5 to a pole or wall etc.

Some other preferred features are shown. The closure may be provided with a valve 6 by means of which the closure can be pressurized or pressure tested. That may be desirable when the closure seals a splice between pressurized cables. The base and the domed cover may be secured together by means of a circular clamp 7, the ends of which are forced together by a bolt or other means 8. The clamp may force base and cover together about an O-ring positioned between them.

The sealing material (b) and means (c) referred to above may be provided, for example, within the base 3.

Such a closure is illustrated with four cables but the invention may be used to seal any reasonable number of cables. The cables may be electrical or optical cables.

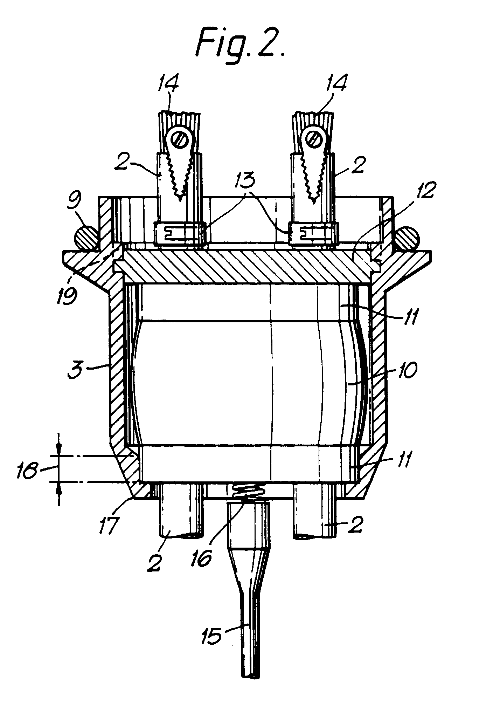

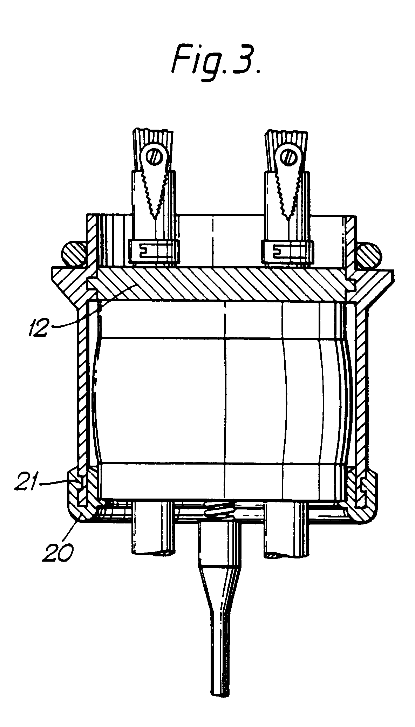

A base is illustrated in cross-section and in more detail in figures 2 and 3.

The base is shown separated from a cover, and an O-ring 9 is shown on which a cover would sit. The O-ring can be seen to rest on a bevelled flange, which together with a similar bevelled flange on the cover provides the means whereby a radially tightened clamp 7 (figure 1) forces the base and cover together.

The cables 2 pass into the closure through holes in the base, and their jackets are removed from the portions within the closure in order to allow their conductors 14 to be connected together.

The closure needs to be sealed against the environment to prevent damage by moisture etc. to the conductors 14. This requires sealing of any gap between the cables and the walls of the base, or other part of the overall housing of the closure. In the embodiment illustrated, such a gap is sealed by means of a sealing material 10 located between two plates 11 or other means allowing the sealing material to be compressed longitudinally.

Such longitudinal compression (which in figures 2 and 3 has not yet been effected) causes the sealing material to be displaced radially outwards to form the desired seal.

The plates 11 can be brought together for this purpose by means of a device 15 that is or contains a nut that on rotation moves along a bolt (hidden in the figures) thus forcing spring 16 against the lower of the two plates 11. The bolt is attached to the upper plate 11. and tightening of the nut therefore brings the plates together. causing the desired deformation of the sealing material 10.

The lower plate 11 can be retained within the base 3 by means such as an inwardly turned rim or lip 17. The lower part of the base 3 may be provided with a waist along which the plate 11 can slide over a distance 18 and still be retained against lateral movement. Preferably the sealing material plus plates can slide a small amount in each axial direction. In this way excess pressure within and outside the closure can add to axial pressure on the sealing material and reinforce the seal.

If rim or lip 17 is an integral part of the base, or is permanently fixed to the base it will be necessary for the sealing material 10 and plates 11 to be inserted into the base 3 from above as drawn. An alternative design is shown in figure 3, allowing the sealing material and plates to be inserted from the bottom. A sealing means 20, optionally a split C-ring, can then be attached to the bottom of the base to retain the lower plate 11. Such means 20 may be locked in place by buttons or other locking means 20, which may involve for example a snap fit or sliding plus rotation.

Figures 2 and 3 illustrate a transverse member 12 which can preferably be slid into the housing and locked (for example by rotation thereof) against axial movement with respect to the housing. I prefer that the transverse member be separate from the upper plate 11, and that the upper plate be able to move axially with respect to the transverse member 12.

The function of the transverse member 12 is to provide mechanical connection between the cables 2 and the closure, preferably the base 3 thereof. The possibility of movement between the upper plate 11 and the transfer member 12 allows the sealing and mechanical functions to be decoupled. In this way an optimum seal can be formed that is not impaired by axial pull on, or bending of, the cables.

The transverse member 12 is preferably a plate or flange that (together with the cables 2) covers substantially the entire cross-section of the base. It may, however, comprise elongate rods or other members and have the form of a frame.

The cables 2 are anchored to the transverse member by means of clamps 13, which may have the form of hose clamps or jubilee clips etc. I prefer that such clamps can be secured to the cables, and subsequently secured to the transverse member 12. If the clamps are permanently, or at least first, attached to the member 12, assembly is likely to be more difficult.

As the sealing material is compressed to form the desired seal, some radial movement of the cables is likely to be desirable if uniform pressure of sealing material is to be obtained around all cables. Sealing of different sizes of cables will make such movement more desirable. This movement is preferably allowed for in the invention by the way in which the clamps 13 are secured to the transverse member 12. Some form of relative sliding motion is preferably allowed for.

For example the transverse member may have substantially radially-extending slots within which the clamps can slide. Each pair of slots and clamps will in general have an interengaging protrusion and recess to prevent or to restrict relative axial movement. One or both of each protrusion and recess will extend in a radial direction in order that the interengagement be maintained over the desired relative radial movement. I prefer that the walls of the recess have rails which mate with slots in the clamps, but the situation may be reversed.

The radially-extending slots preferably extend to the circumference of the transverse member so that the clamps can be inserted into the slots after the cables have been secured in the clamps.

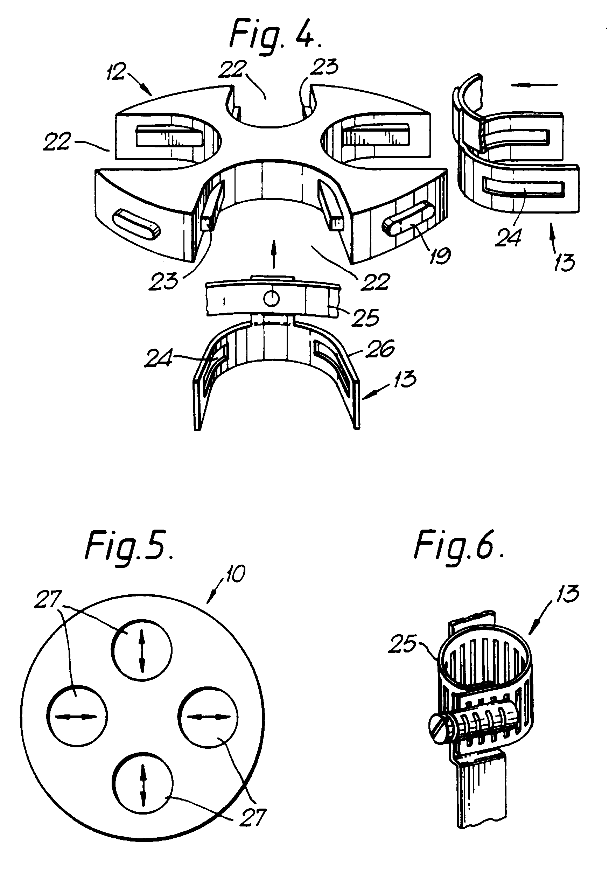

A transverse member 12 and clamps 13 of preferred design are shown in figure 4.

Radial slots 22 are shown into which the clamps 13 can slide, as indicated by the arrows. The slots 22 have rails 23 which engage slots 24 in the clamps preventing relative axial movement as discussed above.

Protrusions 19 are shown, by means of which the transverse member may be locked into the base by rotation. See figure 2.

The clamps comprise first parts 25 (shown incomplete) and second parts 26. The first parts wraparound the cables and are preferably tightened by some screw fitting, and the second parts engage the slots in the transverse member 12 as described.

Figure 5 shows a sealing material 10 in plan view, with holes through which the cables pass. Arrows are shown indicating principal directions of desired displacement of cables, and therefore of sealing material, to ensure sealing of cable of different sizes.

The first part 25 of a clamp 13 is shown in figure 6. A screw fitting is shown by means of which the clamp can be tightened around a cable.

## Claims

1. A cable sealing device (1), which comprises:
(a) a housing (3, 4) into which the cable (2) passes;
(b) a sealing material (10) that seals a gap between the cable (2) and the housing (3, 4); and
(c) means (12) for transmitting an axial force in the cable (2) to the housing (3, 4) other than through the sealing material (b) (10);
characterised in that the means (c) (12) allows substantially radial movement of the cable (2).

2. A device (1) according to claim 1, comprising an in-line cable splice closure, the housing have a sealing material (b) (10) and a means (c) (12) adjacent each end thereof.

3. A device (1) according to claim 1, comprising a butt splice closure, the housing (3, 4) having a sealing material (b) (10) and a means (c) (12) adjacent one end thereof and being blind at an opposite end thereof.

4. A device (1) according to claim 3, in which the housing (3, 4) comprises a base (3) and a cover (4) therefor, the base receiving the sealing material (b) (10) and the means (c) (12).

5. A device (1) according to any preceding claim, being a device for sealing a plurality of cables (2), the sealing material (10) having therethrough respective holes (27) for each cable (2) and the device having a means (c) (12) for each cable.

6. A device (1) according to any preceding claim, in which means (c) (12) comprises a cable clamp (13) having a first part (25) for attachment to a cable (2) and a second part (26) that cooperates with a substantially radially-extending part (22) of the housing (3, 4).

7. A device (1) according to claim 6, in which the housing (3, 4) has an internal transverse member (12) having a substantially radially-extending recess or rail (23) along which the second part (26) of the cable clamp (13) can slide.

8. A device (1) according to any preceding claim, in which the sealing material (b) (10) is provided with means (11, 15, 16) for axially compressing it.

9. A device (1) according to claim 8, in which the means (11, 15, 16) for axially compressing comprises two plates (11) between which the sealing material (10) is positioned and means (15, 16) for bringing the two plates (11) towards one another.

10. A device (1) according to claim 9, in which each plate (11) can move with respect to the means (c) (12).

11. A device (1) according to claim 7, in which the internal transverse member (12) can be slid into the housing (3, 4) and locked against axial movement with respect to the housing (3, 4).

12. A device (1) according to any preceding claim, in which the sealing material (10) comprises a gel.

13. A device (1) according to any preceding claim, in which the sealing material (10) has a cone penetration, measured in accordance with ASTM D217, from 30-400 (10⁻¹ mm) and/or an ultimate elongation, measured in accordance with ASTM D412, greater than 100%.

14. A device (1) according to any preceding claim, in which the sealing material (10) has a passage (27) therethrough for the cable, the passage extending to an outer surface of the material, allowing the material to be wrapped around the cable (2).

## Patentansprüche

1. Kabelabdichtvorrichtung (1), die folgendes aufweist:
(a) ein Gehäuse (3, 4), in welches das Kabel (2) hineingeht;
(b) ein Dichtmaterial (10), das einen Zwischenraum zwischen dem Kabel (2) und dem Gehäuse (3, 4) abdichtet; und
(c) eine Einrichtung (12), um eine axiale Kraft in dem Kabel (2) auf andere Weise als durch das Dichtmaterial (b) (10) auf das Gehäuse (3, 4) zu übertragen;
dadurch gekennzeichnet,
daß die Einrichtung (c) (12) eine im wesentlichen radiale Bewegung des Kabels (2) zuläßt.

2. Vorrichtung (1) nach Anspruch 1,
die eine In-Line-Kabelspleißumhüllung aufweist, wobei das Gehäuse ein Dichtmaterial (b) (10) und eine Einrichtung (c) (12) jedem Ende davon benachbart hat.

3. Vorrichtung (1) nach Anspruch 1,
die eine Stoßspleißumhüllung aufweist, wobei das Gehäuse (3, 4) ein Dichtmaterial (b) (10) und eine Einrichtung (c) (12) aufweist, die dem einen Ende davon benachbart ist und die an einem gegenüberliegenden Ende davon blind ist.

4. Vorrichtung (1) nach Anspruch 3,
wobei das Gehäuse (3, 4) eine Basis (3) und eine Abdeckung (4) dafür aufweist, wobei die Basis das Dichtmaterial (b) (10) und die Einrichtung (c) (12) aufnimmt.

5. Vorrichtung (1) nach einem der vorhergehenden Ansprüche, die eine Vorrichtung zum Abdichten einer Vielzahl von Kabeln (2) ist, wobei das Dichtmaterial (10) jeweilige Durchgangslöcher (27) für jedes Kabel (2) hat und die Vorrichtung eine Einrichtung (c) (12) für jedes Kabel besitzt.

6. Vorrichtung (1) nach einem der vorhergehenden Ansprüche, wobei die Einrichtung (c) (12) eine Kabelklemme (13) aufweist, die ein erstes Teil (25) zur Anbringung an einem Kabel (2) und ein zweites Teil (26) hat, das mit einem im wesentlichen radial verlaufenden Teil (22) des Gehäuses (3, 4) zusammenwirkt.

7. Vorrichtung (1) nach Anspruch 6,
wobei das Gehäuse (3, 4) ein inneres Querelement (12) hat, das eine im wesentlichen radial verlaufende Ausnehmung oder Schiene (23) hat, entlang welcher das zweite Teil (26) der Kabelklemme (13) gleiten kann.

8. Vorrichtung (1) nach einem der vorhergehenden Ansprüche, wobei das Dichtmaterial (b) (10) mit Einrichtungen (11, 15, 16) versehen ist, um es axial zusammenzudrücken.

9. Vorrichtung (1) nach Anspruch 8, wobei die Einrichtungen (11, 15, 16) zum axialen Zusammendrücken zwei Platten (11), zwischen denen das Dichtmaterial (10) positioniert ist, und eine Einrichtung (15, 16) aufweisen, um die beiden Platten (11) zueinander zu bringen.

10. Vorrichtung (1) nach Anspruch 9,
wobei sich jede Platte (11) in bezug auf die Einrichtung (c) (12) bewegen kann.

11. Vorrichtung (1) nach Anspruch 7,
wobei das innere Querelement (12) in das Gehäuse (3, 4) geschoben und gegen eine Axialbewegung in bezug auf das Gehäuse (3, 4) arretiert werden kann.

12. Vorrichtung (1) nach einem der vorhergehenden Ansprüche, wobei das Dichtmaterial (10) ein Gel aufweist.

13. Vorrichtung (1) nach einem der vorhergehenden Ansprüche, wobei das Dichtmaterial (10) eine Konuspenetration, gemessen nach ASTM D217, von 30 bis 400 (10⁻¹ mm) und/oder eine Bruchdehnung, gemessen nach ASTM D412, von mehr als 100 % hat.

14. Vorrichtung (1) nach einem der vorhergehenden Ansprüche, wobei das Dichtmaterial (10) eine hindurchgehende Passage (27) für das Kabel hat, wobei sich die Passage zu einer äußeren Oberfläche des Materials erstreckt und es ermöglicht, daß das Material um das Kabel (2) herum gewickelt wird.

## Revendications

1. Dispositif (1) de scellement de câbles, qui comporte :
(a) un corps (3, 4) dans lequel le câble (2) passe ;
(b) une matière de scellement (10) qui scelle de façon étanche un espace entre le câble (2) et le corps (3, 4) et
(c) des moyens (12) pour transmettre une force axiale présente dans le câble (2) au corps (3, 4) autrement que par la matière de scellement (b) (10) ;
caractérisé en ce que les moyens (c) (12) permettent un mouvement sensiblement radial du câble (2).

2. Dispositif (1) selon la revendication 1, comportant une boîte d'épissure de câbles en ligne, le corps ayant une matière de scellement (b) (10) et des moyens (c) (12) adjacents à chacune de ses extrémités.

3. Dispositif (1) selon la revendication 1, comportant une boîte d'épissure en bout, le corps (3, 4) ayant une matière de scellement (b) (10) et des moyens (c) (12) adjacents à l'une de ses extrémités et étant borgne à son extrémité opposée.

4. Dispositif (1) selon la revendication 3, dans lequel le corps (3, 4) comporte une base (3) et un capot (4) pour celle-ci, la base recevant la matière de scellement (b) (10) et les moyens (c) (12).

5. Dispositif (1) selon l'une quelconque des revendications précédentes, qui est un dispositif pour le scellement de plusieurs câbles (2), la matière de scellement (10) étant traversée de trous respectifs (27) pour chaque câble (2) et le dispositif comportant des moyens (c) (12) pour chaque câble.

6. Dispositif (1) selon l'une quelconque des revendications précédentes, dans lequel les moyens (c) (12) comprennent un collier de câble (13) ayant une première partie (25) destinée à être fixée à un câble (2) et une seconde partie (26) qui coopère avec une partie (22), s'étendant sensiblement radialement, du corps (3, 4).

7. Dispositif (1) selon la revendication 6, dans lequel le corps (3, 4) comporte un élément transversal intérieur (12) ayant un évidement ou rail (23) s'étendant sensiblement radialement, le long duquel la seconde partie (26) du collier (13) de câble peut glisser.

8. Dispositif (1) selon l'une quelconque des revendications précédentes, dans lequel la matière de scellement (b) (10) est pourvue de moyens (11, 15, 16) pour la comprimer axialement.

9. Dispositif (1) selon la revendication 8, dans lequel les moyens (11, 15, 16) de compression axiale comprennent deux plaques (11) entre lesquelles la matière de scellement (10) est placée et des moyens (15, 16) pour rapprocher les deux plaques (11) l'une de l'autre.

10. Dispositif (1) selon la revendication 9, dans lequel chaque plaque (11) peut se déplacer par rapport aux moyens (c) (12).

11. Dispositif (1) selon la revendication 7, dans lequel l'élément transversal intérieur (12) peut pénétrer en glissant dans le corps (3, 4) et être bloqué de façon à ne pas se déplacer axialement par rapport au corps (3, 4).

12. Dispositif (1) selon l'une quelconque des revendications précédentes, dans lequel la matière de scellement (10) comprend un gel.

13. Dispositif (1) selon l'une quelconque des revendications précédentes, dans lequel la matière de scellement (10) présente une pénétration de cône, mesurée conformément à la norme ASTM D-217, de 30-400 (10⁻¹mm) et/ou un allongement à la rupture, mesuré conformément à la norme ASTM D-412, supérieur à 100 %.

14. Dispositif (1) selon l'une quelconque des revendications précédentes, dans lequel la matière de scellement (10) est traversée par un passage (27) pour le câble, le passage s'étendant jusqu'à une surface extérieure de la matière, permettant à la matière d'être enroulée autour du câble (2).
